(19) **Europäisches Patentamt / European Patent Office / Office européen des brevets**

(11) **EP 4 636 389 A1**

(12) **EUROPEAN PATENT APPLICATION**
published in accordance with Art. 153(4) EPC

(43) Date of publication:
**22.10.2025 Bulletin 2025/43**

(21) Application number: **23890942.8**

(22) Date of filing: **16.11.2023**

(51) International Patent Classification (IPC):
***G01N 21/45*** (2006.01)

(52) Cooperative Patent Classification (CPC):
**G01N 21/45**

(86) International application number:
**PCT/ES2023/070688**

(87) International publication number:
**WO 2024/105300 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.11.2022 ES 202230993**

(71) Applicant: **Universidad De Malaga**
**E-29071 Málaga (ES)**

(72) Inventors:
• **SÁNCHEZ RAMÍREZ, Ana**
29071 Málaga (ES)
• **MOLINA FERNÁNDEZ, Íñigo**
29071 Málaga (ES)
• **GODOY RUBIO, Rafael**
29071 Málaga (ES)
• **WANGÜEMERT PÉREZ, Juan Gonzalo**
29071 Málaga (ES)
• **HALIR, Robert**
29071 Málaga (ES)
• **ORTEGA MOÑUX, Alejandro**
29071 Málaga (ES)

(74) Representative: **Elion IP, S.L.**
**Paseo Castellana, 150-4 dcha**
**28046 Madrid (ES)**

(54) **INTEGRATED PHOTONIC BIOSENSOR WITH LAYER DISCRIMINATION ABILITY AND COHERENT READING SYSTEM, AND DEVICE, ASSEMBLY AND METHODS ASSOCIATED WITH SAME**

(57) The invention relates to a photonic biosensor with layer discrimination ability and coherent detection ability, which is formed by a waveguide (100) that simultaneously supports different orthogonal light states (201, 202). These states may be one mode at different wavelengths (205, 206), modes with different polarisations (207, 208), modes of different orders (209, 210) or any combination of same. This allows different measurements to be taken in identical conditions and reduces any interference that may be produced by a variation in temperature or in the concentration of any other component of a sample flowing through a microfluidic channel on the sensor surface. In addition, for the simple and practical implementation of this concept, it is important that the multiplexing (501, 702, 803) and demultiplexing (502, 701, 801) of the states is carried out in an integrated manner on the chip, and that coherent detection (507, 704, 802) is preferably also carried out in an integrated manner on the chip.

FIG. 1.a

EP 4 636 389 A1

## Description

## Technical field

The present disclosure relates to interferometers and sensors based on integrated optical waveguides that simultaneously support several orthogonal light states, each with a different penetration depth.

One object of the invention relates to an integrated photonic biosensor with coherent reading ability and layer discrimination ability. The invention allows interferences and/or external sources of noise that can negatively influence the analyte detection process to be reduced, decreasing the probability of obtaining a false positive. Furthermore, the photonic biosensor is integrable into other devices or systems allowing a practical embodiment of simplified layer discrimination.

## Background of the invention

There is growing interest in the development of miniaturised, simple and low-cost biosensors that allow the detection of the presence of a given biomarker in a sample. These devices can be used to control the quality of certain foods, to monitor air or water or even, in the field of medicine, to diagnose various diseases. It is therefore of great importance to ensure reliable detection of the molecule of interest or analyte.

Conventional techniques used for the diagnosis of diseases, such as ELISA, use fluorescent labels to detect the presence of a particular molecule. However, labelling processes are very labour-intensive and require specialised instrumentation. These processes, in addition to having a detrimental effect on the stability of some molecules, generate a large amount of reagents and other contaminants that must be suitably disposed of, as they may cause an erroneous reading. Therefore, the current trend is to develop integrated optical biosensors on a chip, based on photonic technology, which do not require labelling (label-free), such as those described by M.C. Estévez *et al.* in "Integrated optical devices for lab-on-a-chip biosensing applications". A layer of biological receptors is deposited on the surface of these devices, and the analyte of interest adheres to this layer after flowing the sample over it by means of a microfluidic channel. This molecular binding results in a variation in the refractive index of the cover, which is transformed by the suitable transducer into a variation of another, more easily measurable, magnitude. Finally, the reading system at the sensor output allows the output signal to be interpreted.

In this document, the term chip is used to refer to a piece, preferably having small dimensions, made of a semiconductor material which contains multiple devices which are used to carry out a number of functions, which in this case are biosensors.

In the prior art, it is possible to find the use of plasmonic waveguides for biosensing applications, based on the fact that these waveguides allow more compact sensors with higher sensitivities to be obtained. However, the high losses that characterise plasmonic guides, derived from their metallic nature, make the detection of very small quantities of analyte difficult, exhibiting a worse detection limit despite offering a higher sensitivity. Furthermore, plasmonic modes exhibit deeper penetration depths and extend over larger areas of the cover, making them more sensitive to instabilities or interferences from regions of the cover other than the analyte layer of interest than modes propagating through dielectric guides. The latter are therefore better suited to distinguish molecular interactions between a biomarker and its corresponding biological receptor from other interferences.

Most photonic sensors use the evanescent electromagnetic field extending through the cover of the sensor to detect refractive index variations taking place in the area of the cover. These refractive index variations of the cover can be transformed by means of a transducer into magnitude variations that are usually more readily measurable. In the case of interferometric biosensors, this magnitude variation is the phase difference between two signals. These solutions allow for a simpler detection process, are more tolerant to manufacturing errors and less sensitive to source phase noise than resonant architectures, which transform refractive index variations into a resonance frequency variation. Photonic sensors using interferometric architectures are therefore advantageous for detecting very small quantities of analyte adhered to the sensor surface in a simple and reliable way. Although there are different types, they are all based on the interference between two signals travelling along different optical paths. Of these signals, one of them interacts with the analyte and serves for sensing while the other signal does not interact with the analyte and serves as a reference. The sensing and reference signals can travel through different physical channels using the same orthogonal light state, or through the same physical channel using different orthogonal light states. The latter case is known as differential sensing.

Furthermore, the term "orthogonal light states" is used herein to refer to different configurations of luminous electromagnetic fields that add up in power and can therefore be separated by demultiplexing. These states can be the same mode at different wavelengths, modes of different orders, modes of different polarisations, or a combination of two or more of same.

However, one of the problems exhibited by interferometric sensors is that the variations detected in the cover are not exclusively due to the presence of the analyte. A variation due to temperature fluctuations or variations in concentrations of other components in the sample in areas where the evanescent field has not yet been extinguished may cause an erroneous detection or a false positive. It is therefore useful to distinguish what is happening in areas close to the sensor surface, where the molecular interaction takes place, from other areas that are further away, where variations are likely to be caused by other interferences. In short, it may be suitable to discriminate between different layers or regions of the cover of a biosensor. It may also be useful to obtain additional information about the analyte layer attached to the surface, that is, information about its thickness and/or refractive index. In order to obtain this additional information, it is not enough to take a single measurement as is normally done, but rather it is necessary to take as many independent measurements as there are additional parameters desired to be obtained. In order to solve these problems, there are several papers in the literature that use orthogonal light states with different penetration depths to take the different measurements required. Furthermore, some alternatives propose the use of two physically independent sensing channels or the same channel at two different time instants to take the measurements with orthogonal light states of different penetration depths, but this has the drawback that the additional information obtained corresponds to different sensing surfaces where identical conditions can hardly be ensured. It is therefore desirable to take all the measurements simultaneously on the same physical channel, that is, the different orthogonal light states that will be used for the independent measurements should propagate through the same sensing or reference waveguide.

An example of a differential interferometric sensor where two orthogonal states with different penetration depths are used on the same waveguide is the bimodal differential biosensor presented in US8279445B2. In this device, there is a first single-mode zone supporting a single mode, followed by a transverse discontinuity, and a second bimodal area supporting two modes of different orders. The fundamental mode, because it is more confined in the core than the first-order mode, is less sensitive to variations in the cover caused by the interaction of the analyte with its bioreceptor and acts as an internal reference. A change in the refractive index of the cover material can be detected by a change in the interference pattern formed by the two modes propagating along the guide. Although these types of sensing architectures are simpler, any variation in the sample placed in the sensing window can cause the phase difference of both modes to vary simultaneously by different magnitudes, but in the same direction, such that the phase difference between the two modes and, therefore, the sensitivity of the sensor is lower than if independent physical channels are used. Furthermore, in this case, the biosensor only allows a single independent measurement to be carried out, so it cannot be used to obtain additional information and does not have the ability to discriminate between layers in its cover.

To provide a photonic biosensor with said layer discrimination ability, in "Biosensing with the integrated-optical difference interferometer: dual-wavelength operation", Ch. Stamm *et al.* propose a differential biosensor that uses interference between orthogonally polarised modes as sensing and reference signals for sensing. Furthermore, it uses different wavelengths simultaneously on the same physical sensing medium to achieve different orthogonal light states and to obtain the different measurements required, providing the sensor with layer discrimination ability. Several drawbacks of this solution are that none of the signal detection configurations nor the multiplexing and demultiplexing of signals with different wavelengths are integrated on the chip, resulting in a bulky device that is difficult to carry out to practice in a simple way. On the other hand, as with the bimodal biosensor of US8279445B2, by using the same physical channel for the sensing and reference signals, and therefore being differential, the sensitivity values that can be obtained are lower.

Therefore, in some sensing applications, the sensing channel, where the sample to be analysed is placed, and the reference channel, which is kept isolated from any refractive index variation, are physically separated. There are several architectures that follow this configuration. Among them, dual-polarisation biosensors such as the one presented in "The metrics of surface adsorbed small molecules on the Young's fringe dual-slab waveguide interferometer" by G. Cross *et al.* are used to obtain the thickness and refractive index of the analyte layer attached to the sensor surface. These biosensors allow measurements to be taken using different polarisation modes, but not simultaneously, meaning that identical conditions in both measurements cannot be guaranteed.

Another architecture is the Young interferometer. In "Size-selective analyte detection with a Young interferometer sensor using multiple wavelengths", H.K.P. Mulder *et al.* use said configuration to take several independent measurements at different wavelengths simultaneously on the same physical channel using a sensing arm and a reference arm. Refractive index variations taking place in different regions of the cover depending on their distance from the surface are thereby obtained. However, this proposed solution is very difficult to carry out to practice, as the multiplexing and demultiplexing of the different signals are carried out off the chip. Furthermore, the detection system used does not avoid ambiguity problems that exist in interferometric systems.

Moreover, layer discrimination can be carried out to practice by using several multiplexer/converter devices to manipulate several orthogonal light states, each of which constitutes a different "logical" channel, allowing all of them to propagate simultaneously through the same waveguide, that is, through the same physical channel. These devices allow modal diversity, wavelength diversity or polarisation diversity to be obtained in the same waveguide in a compact, simple and efficient manner.

In short, there is still a need in the prior art for compact, integrated biosensors that allow the molecular binding taking place between a biomarker and its corresponding bioreceptor on the surface of the guide, where the evanescent field is strongest, to be distinguished from other interferences taking place further away, where the evanescent field, although weaker, also detects the variations that occur there. These measurement interferences may be caused, for example, by variations in the concentration of other components of the sample or temperature fluctuations which may also cause a variation in the refractive index of the cover.

**General description of the invention**

The present invention solves the problems described above.

A first aspect of the invention relates to a device in the form of an integrated photonic biosensor comprising:

- a plurality of photonic waveguides each adapted to support a plurality of orthogonal light states;
- means for multiplexing a plurality of orthogonal light states from at least two photonic waveguides of the plurality of photonic waveguides in another photonic waveguide;
- an interferometer comprising a sensing photonic waveguide and a reference photonic waveguide;
- means for demultiplexing a plurality of orthogonal light states in two or more photonic waveguides of the plurality of photonic waveguides; and
- at least one integrated phase diversity circuit coupled to the two or more photonic waveguides.

The reference and sensing guides are arranged separately from each other. The optical excitation with the plurality of orthogonal light states can be divided, by means of a splitter, between the two arms: the sensing arm which comes into contact with the sample, e.g. a fluid, to be analysed and transports the sensing signal; and the reference arm, which preferably does not interact with said sample and transports the reference signal. Each of the sensing and reference guides are coupled to the means for multiplexing and are further adapted to transform, when there is a sample to be analysed, effective index variations of the mode propagating through the sensing guide into a shift in the phase difference between the sensing and reference signals. Furthermore, the means for demultiplexing or the at least one phase diversity circuit is/are coupled to the sensing and reference guides.

The at least one phase diversity circuit allows coherent reading of signals from the two or more photonic waveguides with coherent detection means, for example, a plurality of photodetectors. The biosensor comprises coherent detection means in some embodiments; in other embodiments, the biosensor is adapted to be coupled to coherent detection means, which are external and not integrated into the biosensor.

Thus, the integrated photonic biosensor exhibits at least the following features:

- It has a layer discrimination ability. To do this, it uses several orthogonal light states propagating along the same physical path and having different penetration depths in the sample to be analysed, which allows different independent measurements to be taken to discriminate what is happening at different distances from the sensor surface.
- It allows precise phase detection, avoiding ambiguity and desensitisation.
- It allows miniaturisation, thus improving stability and reducing the complexity of the external equipment needed to read the signals.

The operating principle is that of an interferometric system, in which the interference between the two optical signals circulating through the sensing and reference arms is measured. However, unlike conventional interferometric systems, which use a single photodetector the signal of which is maximal when there is constructive interference and minimal when there is destructive interference, the photonic biosensor uses a coherent detection technique. Said form of detection allows the use of techniques developed for coherent optical communications such as, preferably, a phase diversity circuit. In some embodiments, the at least one phase diversity circuit comprises a multimode interferometer (MMI) at the output of the sensing and reference arms. In some embodiments, the at least one phase diversity circuit is a 120° hybrid comprising a 2x3 port MMI. In some other embodiments, the at least one phase diversity circuit is a 90° hybrid comprising a 2x4 port MMI.

By processing the different output powers together with coherent reception techniques, it is possible to directly monitor relative amplitude and phase difference variations between the sensing and reference arms. This eliminates some of the problems existing in classical interferometric systems such as ambiguity and loss of sensitivity. Immunity to amplitude noise, such as that of a laser source, is also achieved. Furthermore, this detection scheme is robust to manufacturing errors typical of integrated optics, as it allows calibration of the sensor hardware, making the system more resistant to imperfections.

The sensing guide can be processed by means of chemical processes to anchor to its surface a bioreceptor element which, without limitation, may consist of enzymes, nucleic acids, antibodies, proteins or other biologically active molecules capable of carrying out biological biorecognition of the analyte or substance to be detected. The specific biorecognition mechanism and the corresponding sensor surface functionalisation process are not specific objects of this invention.

As indicated above, the reference guide is preferably isolated from interaction with the fluid to be analysed. This can be achieved either by means of depositing a cover of sufficient thickness over the core of the guide that prevents the interaction of the electromagnetic field and the fluid, or by means of using a microfluidic system that conducts the fluid to be analysed exclusively over the sensing arm, or by means of a combination of both.

The guides of the sensing and reference arms transport a plurality of orthogonal light states the different penetration depths of which into the cover allow layer discrimination to be carried out. That is, it allows independent measurements of what is happening at different distances from the sensor surface. The biosensor also comprises integrated optical multiplexers/demultiplexers that allow the different orthogonal light states circulating through the arms of the interferometer to be separated within the chip itself. In this way it is possible to make an independent reading of the effect of the sample to be analysed on each of the different orthogonal light states propagating through the arms of the interferometer. This allows several different measurement signals to be obtained, each corresponding to an orthogonal light state (different "logical" channels). Thanks to multiplexing/demultiplexing, the biosensor, which consists of a single interferometer with two physical arms, functions in practice as a device with multiple "logical" interferometers, each corresponding to a different orthogonal light state. This does not reduce the sensitivity of the biosensor, as it allows independent readings to be obtained for each "logical" interferometer that does have physically separate sensing and reference guides. Also, compared to devices that carry out demultiplexing in a non-integrated manner, this gives the biosensor a higher degree of compactness and makes it simple and robust to unwanted influences from the environment. All in all, this constitutes a miniaturised and efficient system for practical layer discrimination that is easily scalable.

The biosensor includes two possible alternatives in terms of the order in which phase diversity (which makes coherent detection possible) and demultiplexing of orthogonal light states are carried out in an integrated manner:

- Phase diversity is carried out before the demultiplexing of the different orthogonal light states. In these embodiments, the at least one phase diversity circuit operates interchangeably for all orthogonal light states used.
- Phase diversity is carried out after the demultiplexing of the different orthogonal light states. In these embodiments, the at least one phase diversity circuit comprises a specific and independent phase diversity circuit for each orthogonal light state, for example, one phase diversity circuit per orthogonal light state.

Based on the above, in some embodiments, the at least one phase diversity circuit is coupled to the sensing and reference guides. And in some embodiments, the at least one phase diversity circuit precedes a power splitter, such as a 1x2 multimode interference (MMI) device, coupled to a chip-fibre coupling device or grating coupler. In said embodiments, the coupling device should preferably be selective in order to reject the unwanted orthogonal light state and allow demultiplexing of all the states used.

Similarly, based on the alternatives explained above, in some embodiments, the means for demultiplexing are coupled to the sensing and reference guides.

In some embodiments, the means for demultiplexing comprise an integrated modal demultiplexer or an integrated mode converter demultiplexer for separating measurements taken with modes of different orders. In some of these embodiments and also in other embodiments, the means for demultiplexing comprise an integrated polarisation splitter or a polarisation splitter and rotator for separating measurements taken with modes of different polarisations. In some of these embodiments and also in other embodiments, the means for demultiplexing comprise a wavelength demultiplexer to separate measurements taken with modes of different wavelengths.

In some embodiments, each of the sensing and reference guides is adapted to simultaneously support several orthogonal light states corresponding to different wavelengths. In some of these embodiments and also in other embodiments, each of the sensing and reference guides is adapted to simultaneously support orthogonal light states corresponding to different polarisations. In some of these embodiments and also in other embodiments, each of the sensing and reference guides is adapted to simultaneously support orthogonal light states corresponding to waveguide modes of different orders.

In some embodiments, one photonic waveguide of the plurality of photonic waveguides is arranged as a light input guide into the biosensor. For example, the means for multiplexing can further comprise a plurality of power splitters such that at least a first power splitter is coupled to the light input guide and the remaining power splitters of the plurality of power splitters are coupled such that there are arranged at least two pluralities of outputs to which the means for multiplexing are coupled.

The biosensor can receive optical excitation external to the device by means of the light guide. The biosensor processes said optical excitation once it is already inside the biosensor so that one part of the excitation with the plurality of orthogonal light states passes through the sensing guide, and another part of the excitation with the plurality of orthogonal light states passes through the reference guide.

In some embodiments, at least two photonic waveguides of the plurality of photonic waveguides are arranged as light input guides into the biosensor.

The biosensor can receive two or more optical excitations external to the device by means of light input guides. The biosensor processes said optical excitations once they are already inside the biosensor so that they pass through the sensing guide and the reference guide. In some of these embodiments, the means for multiplexing further comprise one or more power splitters to divide the optical signals.

In some embodiments, each of the sensing guide and the reference guide is a dielectric photonic waveguide.

In some embodiments, the photonic biosensor further comprises means for generating the plurality of orthogonal light states.

Means for generating said plurality comprise, for example, one or more lasers integrated in the photonic biosensor by means of monolithic or hybrid integration technologies, thus producing a biosensor with more integrated abilities.

In some embodiments, the photonic biosensor further comprises a plurality of photodetectors for taking measurements of optical signals. In some other embodiments, two or more photonic waveguides of the plurality of photonic waveguides are arranged as light output guides of the biosensor.

The integration of photodetectors in the biosensor increases the abilities of the biosensor and makes it more functional by not requiring one or more optical connections to external photodetectors, thus resulting in an even more compact biosensor. In the second case, photodetectors can be coupled to each light output guide to carry out coherent detection.

A second aspect of the invention relates to a processing device comprising: at least one memory and at least one processor, the at least one memory being configured, with the at least one processor, to: process a plurality of measurements taken by a biosensor, as described in the first aspect of the invention, or by an assembly, as described in the third aspect of the invention, such that it determines one or more parameters of the sample to be analysed.

The device may comprise, for example, but is not limited to, one or more of: a digital signal processor, an integrated circuit, an application-specific integrated circuit, a field programmable gate array, a computer, a mobile phone, etc.

The device processes the signals delivered by photodetectors in the device or coupled to the device, with a processing similar to that used in coherent optical communications, which allows the calculation, for each of the orthogonal light states, of the relative phase difference between the signals travelling through the sensing guide and the reference guide. This provides a phase difference vector $\bar{\phi}$, with each phase difference corresponding to each orthogonal state of light, which varies continuously depending on the interaction of the sample with the sensor surface. From this phase difference vector it is possible to calculate the effective index variation of each of the orthogonal light states, for example by means of the matrix expression:

$$\overline{\Delta n_{\text{eff}}} = \overline{\overline{\text{diag}\left(\frac{\lambda_i}{2\pi L}\right)}}\,\bar{\phi},$$

where $\lambda_i$ is the wavelength of each orthogonal light state, and $L$ is the length of the sensing arm of the interferometer. The effective index variation vector of each orthogonal light state $\overline{\Delta n_{\text{eff}}}$ contains all the essential measurement information from which it is possible to calculate, using a mathematical process, other parameters of interest for biodetection.

Thus, in some embodiments, the processing of the device comprises obtaining the refractive index variations $\overline{\Delta n}$ of a plurality of layers of known thickness located at different distances from the sensor surface. To do this, from the transverse geometry of the sensing waveguide, it is possible to calculate a sensitivity matrix $\overline{\overline{S_{\text{wg}}}}$ for the guide that relates refractive index variations in each of the layers of the cover $\overline{\Delta n}$ to effective index variations of the orthogonal light state $\overline{\Delta n_{\text{eff}}}$ through the following system of equations:

$$\overline{\Delta n_{\text{eff}}} = \overline{\overline{S_{\text{wg}}}} \cdot \overline{\Delta n}.$$

The device can furthermore solve this system of equations and determine the refractive index variations that have occurred in each of the layers that make up the cover $\overline{\Delta n}$ from the measurements of effective index variations experienced by the corresponding orthogonal light states $\overline{\Delta n_{\text{eff}}}$. This is equivalent to the inversion of the system matrix, that is:

$$\overline{\Delta n} = \overline{\overline{S_{\text{wg}}^{-1}}} \cdot \overline{\Delta n_{\text{eff}}}.$$

Matrix inversion can be carried out in a way that does not amplify noise and possible measurement errors committed if the matrix is well conditioned, that is, if its condition number is as close to one as possible. This is achieved by using orthogonal light states with penetration depths that are as different as possible from each other for the different measurements. In this sense, the integration of means for multiplexing and demultiplexing in the biosensor of the first aspect of the invention for the efficient manipulation of orthogonal light states provides an effective technique for reducing the condition number of the sensitivity matrix, thus optimising the detection process and decreasing the detection limit, that is, the minimum discernible change in the index of each layer.

Alternatively, the essential information $\overline{\Delta n_{\text{eff}}}$ provided by the measurement system can be used by the device to calculate other data of interest for biorecognition, such as information on the thickness of the layers $\overline{d}$ on the sensor if the refractive indices of the layers are assumed to be known, the numerical value of the sensitivity matrix $\overline{\overline{S'_{\text{wg}}}}$ being different in this case but not the general solution method.

$$\overline{\Delta n_{\text{eff}}} = \overline{\overline{S'_{\text{wg}}}} \cdot \bar{d}$$

Finally, it is possible to obtain mixed solutions, a combination of the above, such as the possibility of extracting the refractive index values and thicknesses of a subset of the layers on the core of the guide.

A third aspect relates to an assembly comprising: a biosensor as described in the first aspect of the invention; and a processing device as described in the second aspect of the invention and/or means for generating the plurality of orthogonal light states coupled to one or more photonic waveguides of the plurality of photonic waveguides and/or a plurality of photodetectors coupled to two or more photonic waveguides of the plurality of photonic waveguides for taking measurements of the optical signals.

The means for generating the plurality of orthogonal light states and/or the photodetectors may be external to the device, in which case they are preferably coupled to the biosensor by means of one or more coupling devices. Preferably, the coupling devices are surface grating couplers for coupling light from the chip to a fibre or fibre array and vice versa, although other coupling devices are equally valid within the scope of the present invention. Coupling devices may be part of the biosensor itself or of the assembly.

The means for generating the plurality of orthogonal light states may comprise one or more lasers that are coupled to the one or more photonic waveguides.

In some embodiments, the assembly comprises, in addition to the biosensor, two or all of: the processing device, the means for generating the plurality of orthogonal light states, and the plurality of photodetectors.

A fourth aspect of the invention relates to a method comprising: providing a biosensor as described in the first aspect of the invention or an assembly as described in the third aspect of the invention; generating in the biosensor or coupling to the biosensor the plurality of orthogonal light states such that it is guided to the means for multiplexing; guiding a part of the plurality of orthogonal light states through the sensing guide to contact, through its cover, a sample to be analysed; guiding another part of the plurality of orthogonal light states through the reference guide without contacting the sample to be analysed; coherently detecting signals corresponding to the part of the plurality of orthogonal light states guided through the sensing guide and to the part of the plurality of orthogonal light states guided through the reference guide.

In some embodiments, the method further comprises arranging the sample to be analysed on the cover of the sensing guide.

In some embodiments, the method further comprises determining one or more parameters of the sample to be analysed from the processing of a plurality of measurements taken by the biosensor on one or more orthogonal light states of the plurality of orthogonal light states.

Such determination may be carried out, for example, in the manner described in relation to the second aspect of the invention.

**Brief description of the drawings**

As a complement to the description provided and for the purpose of helping to make the features of the invention more readily understandable, said description is accompanied by a set of drawings which, by way of illustration and not limitation, represent the following:

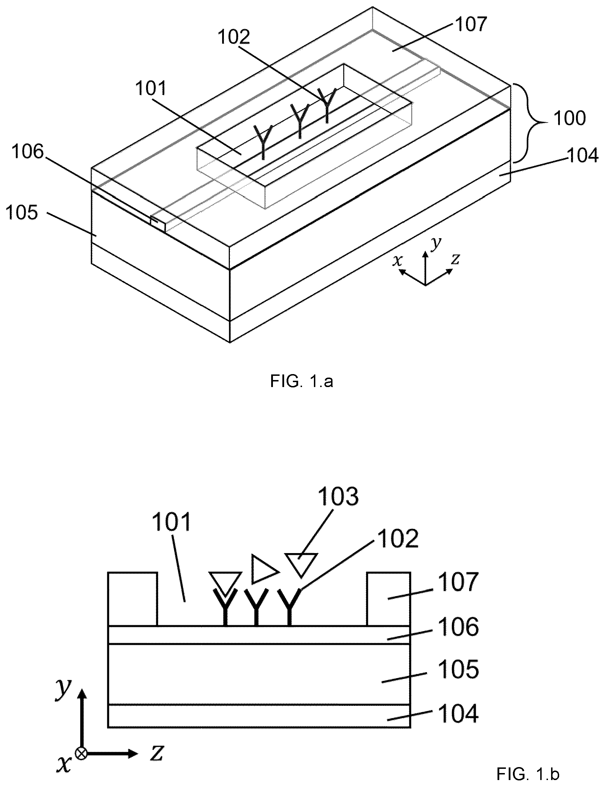

Figure 1.a shows a perspective view of a photonic waveguide biosensor according to some embodiments. The bioreceptors are deposited in the sensing window, on the surface of the guide. By means of a microfluidic channel, the sample flows over the surface of the guide and the biomarker to be detected adheres to the bioreceptors, causing a variation in the effective index of the mode propagating through the guide.

Figure 1.b shows a section of the photonic biosensor in the *y-z* plane, for a constant value of x , centred on the waveguide.

Figure 2.a shows a slice in the *y-z* plane of a biosensor in the form of a planar or slab type sensing waveguide, which simultaneously supports two orthogonal light states with different penetration depths in the cover.

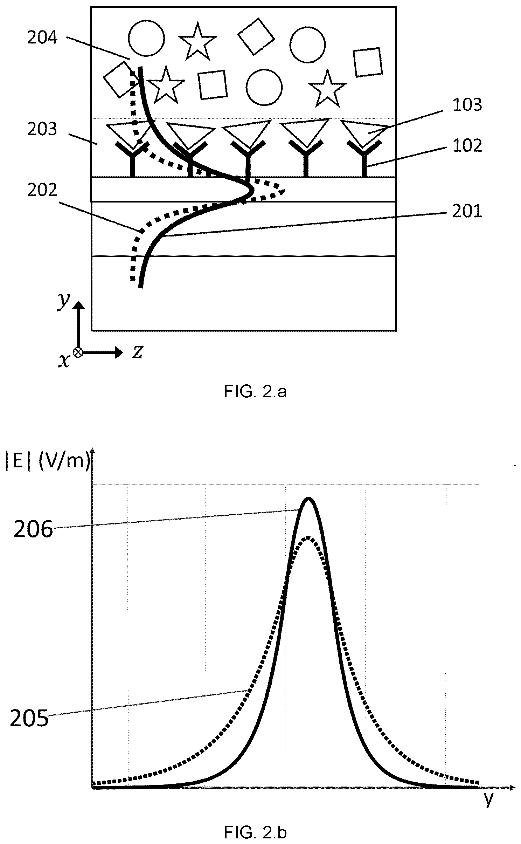

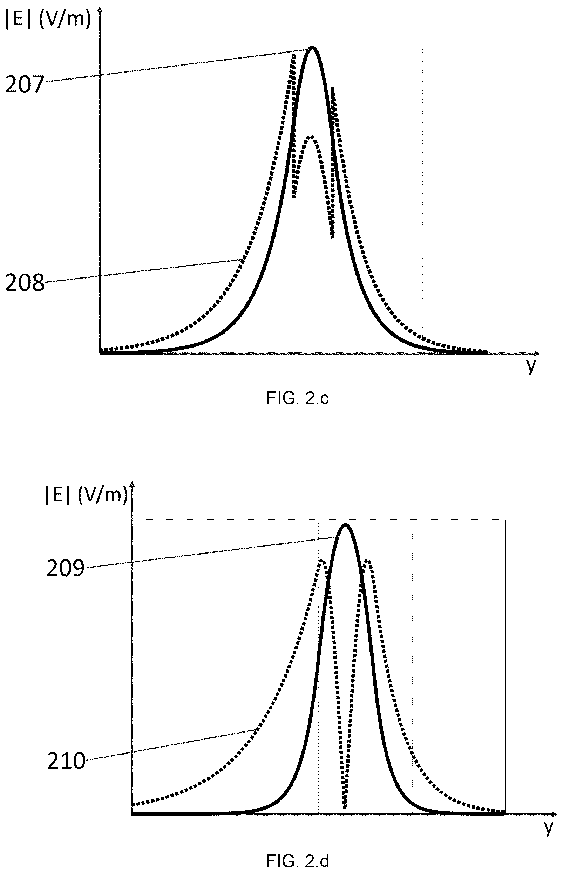

Figure 2.b shows the electric field modulus of two orthogonal light states corresponding to the same mode at two different wavelengths in the biosensor of Figure 2.a which has an aqueous solution on its cover. The solid line represents the mode at a shorter wavelength, in which the field is more confined in the core, while the dashed line represents the mode at a longer wavelength which has a higher deconfinement and, therefore, a greater penetration depth.

Figure 2.c shows the electric field modulus of two orthogonal light states corresponding to two modes with different polarisations in the biosensor of Figure 2.a which has an aqueous solution on its cover. The solid line represents the TE mode, while the dashed line represents the TM mode.

Figure 2.d shows the electric field modulus of two orthogonal light states corresponding to two modes with different orders in the biosensor of Figure 2.a which has an aqueous solution on its cover. The solid line represents $Te_0$ mode, while the dashed line represents $TE_1$ mode.

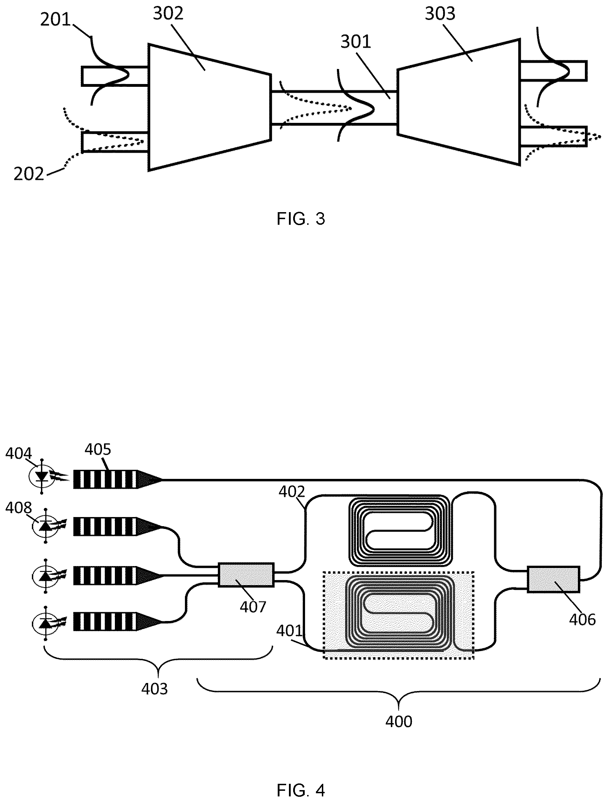

Figure 3 shows a schematic view of a multiplexer device that allows the combination of two orthogonal light states on the same physical waveguide. A demultiplexer device which allows the two orthogonal light states to be separated again for independent processing is illustrated at the output. Both devices are integrable in a biosensor according to the embodiments.

Figure 4 illustrates a schematic view of a biosensor based on a Mach-Zehnder interferometric architecture with coherent reading. In this case, grating couplers are used to couple the light from the chip to the fibre and vice versa, and a phase diversity circuit implemented by a 2x3 MMI is used to allow coherent detection.

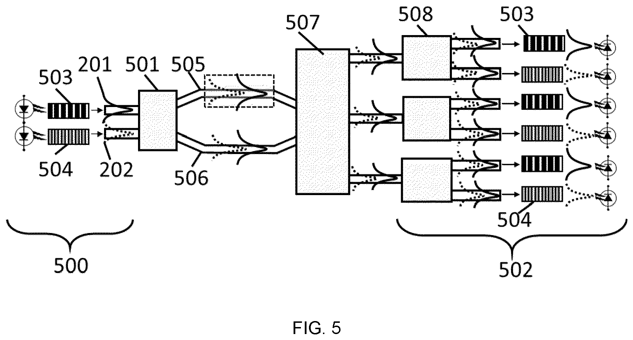

Figure 5 shows a schematic view with a possible embodiment of the device according to the present invention. Two different grating couplers are coupled to two different orthogonal light states to the chip which, using 2x2 MMIs that operate correctly for both states, are multiplexed on the same physical waveguide. For coherent detection, the phase diversity circuit or 2x3 MMI is used, which must also operate for all the states used. The resulting signals are split with another 1x2 MMI and, using sufficiently selective grating couplers that allow one state to pass through and reject the other, it is possible to obtain three out-of-phase outputs for each of the light states used. By processing these outputs together, it will be possible to recover the signal unambiguously.

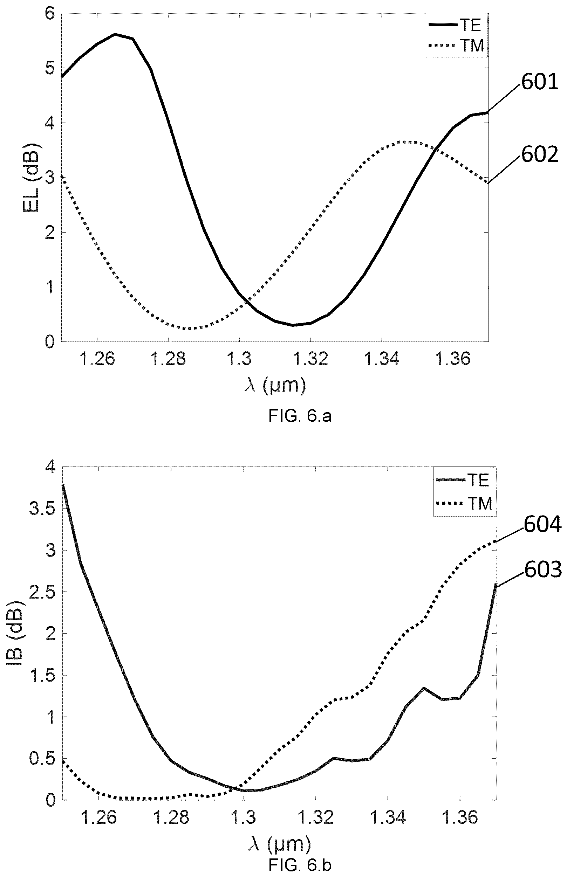

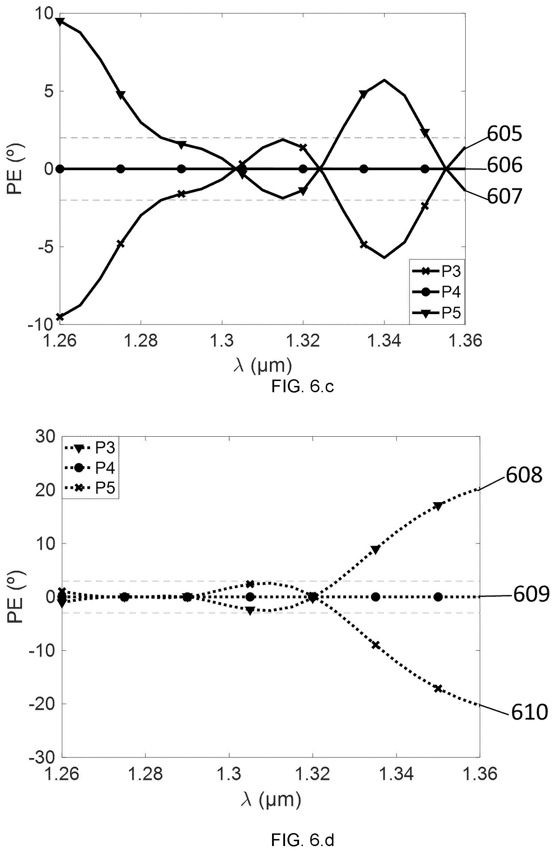

Figure 6.a shows the simulation of the excess losses of the 2x3 MMI used in the embodiment of Figure 5 to implement polarisation diversity. The solid line represents the TE mode, and the dashed line represents the TM mode.

Figure 6.b represents the simulation of the 2x3 MMI imbalance used in the embodiment of Figure 5 to implement polarisation diversity. The solid line represents the TE mode, and the dashed line represents the TM mode.

Figure 6.c shows the phase error simulation for the TE mode of the 2x3 MMI used in the embodiment of Figure 5 to implement polarisation diversity. Each of the symbols used represents the phase error of one of the output ports.

Figure 6.d represents the phase error simulation for the TM mode of the 2x3 MMI used in the embodiment of Figure 5 to implement polarisation diversity. Each of the symbols used represents the phase error of one of the output ports.

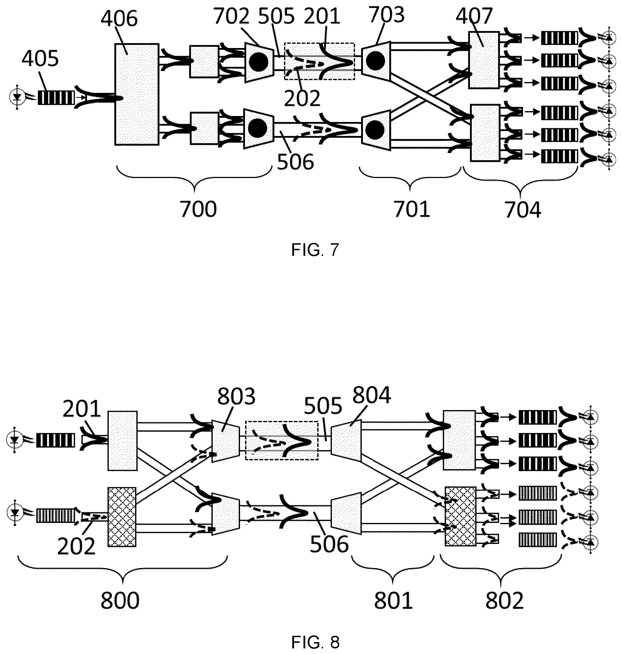

Figure 7 shows a schematic view of another preferred alternative embodiment, where both the generation of the different orthogonal light states and the input and output stage are integrated. The use of integrated converter multiplexer/demultiplexer devices allows all the photonic components of the system to operate for a single orthogonal light state, simplifying the practical embodiment of the invention. The trapezoid with a black circle inside it symbolises that the multiplexer/demultiplexer also allows the conversion from one orthogonal light state to another.

Figure 8 illustrates a schematic view of another possible embodiment, where a system with two independent inputs is proposed, one for each of the states used to take the different measurements. The signals in the same waveguide are combined by means of a multiplexer and then separated by means of a demultiplexer. In this embodiment, it is necessary to use phase diversity circuits and gratings that operate independently for each light state.

**Detailed description of embodiments of the invention**

For the purposes of this disclosure, the following terms should be taken into account:

- Analyte: any sample or substance capable of being detected by the biosensor of the present invention.
- Orthogonal light states: different light waves travelling through the same physical medium which add up in power and can therefore be separated by means of demultiplexing.
- Multiplexing: is the technique of combining two or more orthogonal light states and transmitting them over a single physical transmission medium. The reverse process is known as demultiplexing.
- Coherent detection system: a method of interrogation which allows the determination of the relative phase and amplitude between two signals, the sensing and reference signals, from the power measurements of at least three out-of-phase combinations of the output signals.
- Integrated system-on-chip: An assembly of all the photonic components that make up a given application on a single semiconductor substrate, preferably of small dimensions (chip), thanks to lithography and etching technologies known in the prior art of the semiconductor industry.

Biosensors according to the present disclosure are preferably implemented on silicon nitride platforms that allow for high integration ability and are also compatible with CMOS technology. Furthermore, these platforms also offer more manufacturing error tolerance, with lower losses and less sensitivity to temperature variations than silicon platforms. However, other embodiments are implemented on different photonic platforms, such as those using silicon, which also benefit from CMOS compatibility. In preferred embodiments, all the waveguides of the device are made of a silicon nitride core, deposited on an insulating layer which may be, for example, silicon dioxide. The material of the cover may vary for different embodiments of the invention, with a silicon dioxide protective cover being preferred for all the guides except in those structures having a window to expose the core of the guide to air. These structures will typically be the sensing guides and grating couplers in the event that the latter are used to couple/extract the light to/from the chip.

Figures 1.a and 1.b show a photonic biosensor as an optical or photonic waveguide according to the embodiments. The biosensor includes a sensing window (101), on which bioreceptors (102) are deposited and to which the analyte of interest (103) is adhered. Although not visible in Figures 1.a and 1.b, the sample flows over the sensor surface through a microfluidic channel. The waveguide used can be photonic wire, slot, buried, or a rib. Preferably, a rectangular photonic wire (100) deposited on a substrate (104) is used. Said guide (100) comprises several layers of optically transparent material (105, 106, 107) deposited on a substrate (104) preferably made of silicon. Preferably, but without limitation, a layer of e.g. about 3 $\mu$m thick silicon dioxide (BOX) (105) and a core of e.g. about 300 nm thick silicon nitride (106) are in turn deposited on such a substrate. Said core is protected, except in the sensing area (101), by a silicon dioxide cover (107), the thickness of which is e.g., about 2 $\mu$m.

In the figures of the present document, the use of solid lines to represent field distributions refers to one orthogonal light state (201), while dashed lines represent another different orthogonal light state (202).

Note that, for the sake of simplicity, Figures 2.a, 2.b, 2.c and 2.d represent a planar or slab guide as a sensing guide to better observe the differences between the field distributions of the orthogonal light states that can propagate through the same guide, with the conclusions and results being able to be extrapolated to the rectangular photonic guide used in practice. Furthermore, it has been assumed that a liquid solution containing the sample to be analysed is present on the cover. As shown in Figure 2.a, at least two orthogonal light states with different penetration depths (201, 202) must propagate on the same waveguide to provide the biosensor with layer discrimination ability. In this way it is possible to distinguish the interactions that occur in the analyte of interest layer (203) from those interferences that occur in other regions of the cover (204). In preferred embodiments, the starting point is a waveguide of height h=300 nm, the width of which can be suitably designed so that the guide can support the different orthogonal states desired to obtain several measurements under identical conditions. For example, to implement polarisation diversity, a width of W=1 $\mu$m will be sufficient. As shown in Figures 2.b, 2.c and 2. d, the states used may be, respectively, the same mode at different wavelengths (205, 206), modes with different polarisations (207, 208), modes of different orders (209, 210) or a combination of two or more of same.

As shown in Figure 2.b, the penetration depth of a mode varies with wavelength. At longer wavelengths, the penetration depth of a mode increases and decays more slowly across the cover (205), while at shorter wavelengths, the field extending over the cover decays faster (206). This allows different wavelengths to be used to obtain different orthogonal light states and to take several measurements. The greater the difference between the wavelengths used, the greater the difference between the field distributions used and, therefore, the better conditioned the problem will be.

From Figure 2.c, it can be stated that it is also possible to take several measurements using modes with different polarisations, that is, to take one measurement with the TE or Transverse Electric mode (207) and another with the TM or Transverse Magnetic mode (208).

Similarly, as shown in Figure 2.d, modes of different orders can also be used, since the fundamental mode (209) is more confined in the core than the first-order mode (210).

The different light states (201, 202) used must be able to be combined to propagate simultaneously in the same physical waveguide (301) as shown, for example, in Figure 3. To do this, a multiplexing device (302) is used. Similarly, at the output of the corresponding optical or photonic waveguides, the light states (201, 202) must be separated by a demultiplexing device (303) for subsequent independent processing of the different measurements.

Figure 4 shows a biosensor that is not part of the scope of the present invention as it does not include layer discrimination, although said biosensor includes components that biosensors (with layer discrimination) according to some embodiments of the invention include or may include. The biosensor includes a Mach-Zehnder type interferometric architecture (400), as included in some biosensors according to the embodiments; in some other embodiments, the biosensors include another interferometric architecture with physically separated sensing arm (401) and reference arm (402). The biosensor also includes means for coherent detection of the signal (403). The input signal from a light source, preferably a laser source (404), external to or part of the biosensor, is coupled to the biosensor by means of grating couplers (405) external to or part of the biosensor. This signal is split between the sense guide (401) and reference guide (402) by a power splitter, which can be implemented in integrated optics using a multimode interference device or 1x2 MMI (406). The signal travelling through the sensing guide (401) interacts with the sample and, when molecular interaction occurs, experiences a relative phase difference variation with respect to the reference guide (402). At the output stage of the interferometer, the biosensor includes at least one phase diversity circuit implemented by means of another 2x3 multimode interference device (407), which allows three output signals out of phase with each other to be obtained for coherent detection. These signals are coupled from the biosensor to a fibre or fibre array using, again, one grating coupler (405) for each of them, which in biosensors according to the embodiments of the invention may be external to or part of the biosensor. Subsequently, the signals are converted into photocurrent by means of their corresponding photodetectors (408) and processed together in the electrical domain. In this way, it is possible to mitigate the typical problems of interferometric architectures and to obtain the relative phase difference experienced by the sensed signal due to the presence of analyte in the sample.

In order for the biosensors according to the present disclosure to support several orthogonal light states and to discriminate layers, the interferometric coherent reading architecture (400) is preferably of a multi-state type. Multi-state architectures are adapted to separate and measure the interferograms corresponding to each state, extracting the information contained in each one. Several integrated sensing options are possible such as, for example, those described below.

In some embodiments, the different orthogonal light states (201, 202) are generated externally to the biosensor, with an independent input for each mode (500) as illustrated in Figure 5. To this end, an assembly including the biosensor may further include two or more different laser sources at different wavelengths or using the same source and a polarisation controller to obtain polarisation diversity. Both the combination (501) of these states and their separation will be carried out integrated on the chip (503, 504, 508), as shown in Figure 5. Although in the embodiments illustrated in Figure 5 it is assumed that only two orthogonal states are used, in other embodiments there are a larger number of orthogonal light states. In order to couple the light to the chip, a grating coupler is used for each of the light states used (503, 504). Subsequently, a 2x2 MMI (501) is used as a multiplexer device combining the two orthogonal states in the sensing waveguide (505) and reference waveguide (506), which are adapted to allow simultaneous propagation of the different orthogonal light states through the same waveguide. As a combiner element at the output stage of the interferometer, in these embodiments the biosensor includes a 2x3 MMI (507), to allow coherent detection, followed by a 1x2 MMI (508) at each output to divide the power of each output into two waveguides. To decouple each of the light states used from each output of these MMIs to the fibre, the biosensor or assembly includes two different gratings (one for each arm of the 1x2 MMI) (503, 504). Each of these gratings is preferably sufficiently selective so as to allow one light state (the desired one) to pass through and reject the unwanted light state. Solely for the sake of clarity, photonic components that only operate for one state (503) have been represented in a different shade from those that only operate for the other state (504).

For example, in some embodiments in which the biosensor carries out polarisation diversity at a wavelength of 1310 nm, two types of gratings are required that are preferably sufficiently selective: gratings designed to allow coupling/uncoupling of the TE mode and reject the TM mode (503) and gratings designed to allow coupling/uncoupling of the TM mode and reject the TE mode (504). Furthermore, the multimode interference devices (2x2 MMI, 2x3 MMI and 1x2 MMI) (501, 507, 508) are adapted to operate interchangeably for all orthogonal light states used. For these embodiments, when it is desired to discriminate e.g. a 10 nm layer of protein from the rest of the cover, the following sensitivity matrix is calculated, where each column refers to a different layer of the cover and each row to the corresponding measurement of an orthogonal light state:

$$\overline{\overline{S_{\text{wg}}}} = \begin{bmatrix} 0.016212 & 0.148719 \\ 0.02077 & 0.24736 \end{bmatrix}.$$

The condition number of said matrix is about 91 and the minimum refractive index variation that can be resolved is about $10^{-8}$ RIU in the nearest 10 nm of the sensor surface and $10^{-9}$ RIU in the rest of the cover.

To evaluate the performance of multimode interference devices or MMIs of these embodiments, the figures of merit commonly used are excess losses, imbalance and the phase error obtained for each polarisation at the nominal wavelength. Typically, excess losses and imbalance should not exceed 1.5 dB, while the phase error should be less than 5 °.

As for the 2x3 MMI (507) of the at least one phase diversity circuit, in these embodiments the 2x3 MMI (507) is preferably adapted to operate for both polarisations, which is possible to achieve using e.g. a width of W=13.3 $\mu$m and length L= 315 $\mu$m.

Figure 6.a shows the excess losses for the TE mode with a solid line (601) and for the TM mode with a dashed line (602), obtaining excess losses of less than 1.5 dB at the design wavelength (1310 nm) for both cases. Figure 6.b illustrates the maximum imbalance between the output ports (that is, the difference between the highest power and the lowest power) for TE (603) and TM (604) modes, resulting in less than 1 dB of imbalance for both polarisations. Figure 6.c also shows phase error values for TE polarisation at each of its three output ports (605, 606, 607) of less than 2°. Finally, figure 6.d also shows the phase error for TM polarisation at each MMI output port (608, 609, 610), obtaining a phase error of less than 3°.

For 1x2 MMIs (508), of width e.g. W=8.8 $\mu$m and length L=53 $\mu$m, excess losses of 0.05 dB for the TE mode and 0.07 dB for the TM mode at nominal wavelength (1310 nm) are obtained. Furthermore, given its symmetry, the phase error and imbalance are zero. Moreover, for the 2x2 MMI (501), of e.g. width MMI W=8.8 $\mu$m and length L=211 $\mu$m, excess losses of 0.2 dB for the TE mode and 0.1 dB for the TM mode at nominal wavelength are obtained. The imbalance is less than 0.5 dB for both polarisations, and the phase error is less than 2°.

As for devices for coupling the light from the chip to the fibre or grating couplers, the coupler device for the TE mode (503), with a period of e.g. A=1.5 $\mu$m and a duty cycle of DC=55 %, it exhibits a coupling efficiency of 30% and a rejection of unwanted polarisation (TM mode) of 21 dB. Since in these embodiments preferably a fibre array can be used, it is desirable for the designs of both polarisations to exhibit the same radiation angle (~44° in air, which is equivalent to a fibre polishing angle of about 29°). As a consequence, the grating for the TM mode, with a period of e.g. A=1.5 μm and a duty cycle of DC=75%, (504) exhibits a worse coupling efficiency of 18%, with a TE mode rejection of 18 dB.

However, from a power point of view, these embodiments are less efficient than those proposed below, since, for each orthogonal state, 50% of the power injected into the chip is wasted, where said power is filtered and rejected by the gratings at the output.

Figure 7 shows a biosensor according to some embodiments in which there is arranged a single input where both the generation of the different light states and the multiplexing system (700) and the demultiplexing system (701) are integrated on the chip, further simplifying the practical implementation of the biosensor. In this biosensor, there is a single input, followed by several cascaded 1x2 MMI devices (406) to divide the input power into several outputs and an integrated multiplexer-converter device (702) allowing the combination of different orthogonal light states on the same waveguide (505, 506). In order for the sensing system to operate properly, both the sensing guide (505) and the reference guide (506) are adapted to support the simultaneous propagation of the different orthogonal light states (201, 202). At the output, the biosensor includes a demultiplexer-converter (703) which separates the different measurements taken with each of the modes or light states used, but converted to the fundamental light state. The biosensor includes at least one phase diversity circuit (704) by means of a 2x3 MMI (407) at each output of the demultiplexer. In this possible output scheme, the biosensor preferably includes as many independent 2x3 MMIs (407) as there are orthogonal light states used. Furthermore, the biosensor may include different converter multiplexer/demultiplexer devices, including those known in the prior art. For example, to implement polarisation diversity, a polarisation combiner/splitter and rotator (PSR) can be used, and to obtain modal diversity, a mode converter multiplexer device can be used. The advantage of these embodiments is that all the photonic components can be optimised for only one orthogonal light state. As noted above, such a biosensor or set of biosensors also provides a power efficiency improvement over the embodiments described above.

Figure 8 shows a biosensor according to other embodiments. The biosensor includes a first stage with two inputs (800), similar to that of the biosensor of the embodiments described in relation to Figure 5, with an output stage (801, 802) similar to that of the biosensor of the embodiments described in relation to Figure 7, with the difference that, for the sake of simplicity, it includes demultiplexer devices that do not convert the light states, but merely separate them, although they could be replaced by converter demultiplexer devices. Therefore, in these embodiments, it is not necessary to convert and generate the orthogonal light states (201, 202) in an integrated manner, but the integrated demultiplexing (801) is carried out before coherent detection (802). In this way, the same mode at different wavelengths or modes of different polarisations can be coupled to each of the inputs of the system and a multiplexer device (803) and demultiplexer device (804) can be used to combine and separate the different states, respectively. In these embodiments, to implement wavelength diversity, the biosensor may include integrated wavelength multiplexers/demultiplexers such as arrayed waveguide gratings (AWGs) or other diffraction gratings such as Echelle gratings. Similarly, with a mode multiplexer and demultiplexer, diversity of modes of different orders can also be carried out to practice. For this configuration, both the MMIs and the grating couplers are adapted to operate independently for each orthogonal light state used. Furthermore, as in the preceding embodiments, these are also more energy efficient than those described in relation to Figure 5.

## Claims

1. An integrated interferometric photonic biosensor, comprising:

   • a plurality of photonic waveguides (100, 301) each adapted to support a plurality of orthogonal light states (201, 202);
   • means for multiplexing (302) a plurality of orthogonal light states (201, 202) from at least two photonic waveguides of the plurality of photonic waveguides (100, 301) in another photonic waveguide (100, 301);
   • an interferometer comprising a sensing photonic waveguide (505) and a reference photonic waveguide (506), the reference waveguide (506) being separated from the sensing waveguide (505), a cover of the sensing waveguide (505) being arranged to contact a sample to be analysed, each of the sensing and reference guides (505, 506) being coupled to the means for multiplexing (302), and the sensing and reference guides (505, 506) being adapted to transform, when the sample to be analysed is present, effective index variations into a phase shift;
   • means for demultiplexing (303) a plurality of orthogonal light states (201, 202) in two or more photonic waveguides (100, 301) of the plurality of photonic waveguides (100, 301); and
   • at least one phase diversity circuit (407) coupled to the two or more photonic waveguides; wherein the means for demultiplexing (303) or the at least one phase diversity circuit (407) is coupled to the sensing and reference guides (505, 506).

**2.** The biosensor according to claim 1, wherein the reference guide (506) is arranged isolated from the sample to be analysed.

**3.** The biosensor according to any one of the preceding claims, wherein the at least one phase diversity circuit (407) comprises a 120° optical hybrid or a 90° optical hybrid.

**4.** The biosensor according to any one of the preceding claims, wherein each of the sensing and reference guides (505, 506) is adapted to simultaneously support several orthogonal light states (201, 202) corresponding to different wavelengths (205, 206).

**5.** The biosensor according to any one of the preceding claims, wherein each of the sensing and reference guides (505, 506) is adapted to simultaneously support orthogonal light states (201, 202) corresponding to different polarisations (207, 208).

**6.** The biosensor according to any one of the preceding claims, wherein each of the sensing and reference guides (505, 506) is adapted to simultaneously support orthogonal light states (201, 202) corresponding to waveguide modes of different orders (209, 210).

**7.** The biosensor according to any one of the preceding claims, wherein the at least one phase diversity circuit (407) is coupled to the sensing and reference guides (505, 506).

**8.** The biosensor according to claim 7, wherein the means for demultiplexing comprise a 1x2 multimode interference (MMI) device (508) coupled to a chip-fibre coupling device or grating coupler (503, 504).

**9.** The biosensor according to any one of claims 1 to 6, wherein the means for demultiplexing (303) are coupled to the sensing and reference guides (505, 506).

**10.** The biosensor according to claim 9, wherein the means for demultiplexing (303) comprise an integrated modal demultiplexer (804) or an integrated mode converter demultiplexer (703) for separating measurements taken with modes of different orders.

**11.** The biosensor according to any one of claims 9 and 10, wherein the means for demultiplexing (303) comprise an integrated polarisation splitter (804) or a polarisation splitter and rotator (703) for separating measurements taken with modes of different polarisations.

**12.** The biosensor according to any one of claims 9 to 11, wherein the means for demultiplexing (303) comprise a wavelength demultiplexer (804) for separating measurements taken with modes of different wavelengths.

**13.** The biosensor according to any one of the preceding claims, wherein one photonic waveguide of the plurality of photonic waveguides is arranged as a light input guide into the biosensor; wherein the means for multiplexing (303) further comprise a plurality of power splitters (406) such that at least a first power splitter (406) is coupled to the light input guide and the remaining power splitters (406) of the plurality of power splitters are coupled such that there are arranged at least two pluralities of outputs to which the means for multiplexing (303) are coupled.

**14.** The biosensor according to any one of claims 1 to 12, wherein at least two photonic waveguides of the plurality of photonic waveguides are arranged as light input guides into the biosensor.

**15.** The biosensor according to any one of the preceding claims, wherein each of the sensing guide and reference guide (505, 506) is a dielectric photonic waveguide.

**16.** The biosensor according to any one of the preceding claims, further comprising means for generating the plurality of orthogonal light states (201, 202).

**17.** The biosensor according to any one of the preceding claims, further comprising a plurality of photodetectors for taking measurements of optical signals.

**18.** A processing device comprising: at least one memory and at least one processor, the at least one memory being configured, with the at least one processor, to: process a plurality of measurements taken by the biosensor according to any one of the preceding claims such that it determines one or more parameters of the sample to be analysed.

**19.** An assembly comprising: a biosensor according to any one of claims 1 to 17; and the processing device according to claim 18 and/or means for generating the plurality of orthogonal light states (201, 202) coupled to one or more photonic waveguides of the plurality of photonic waveguides and/or a plurality of photodetectors coupled to two or more photonic waveguides of the plurality of photonic waveguides for taking measurements of optical signals.

**20.** A method comprising: providing a biosensor according to any one of claims 1 to 18 or an assembly according to claim 19; generating in the biosensor or coupling to the biosensor the plurality of orthogonal light states (201, 202) such that it is guided to the means for multiplexing (303); guiding a part of the plurality of orthogonal light states (201, 202) through the sensing guide (505) to contact, through its cover, a sample to be analysed; guiding another part of the plurality of orthogonal light states (201, 202) through the reference guide (506) without contacting the sample to be analysed; coherently detecting signals corresponding to the part of the plurality of orthogonal light states (201, 202) guided through the sensing guide (505) and to the part of the plurality of orthogonal light states (201, 202) guided through the reference guide (506).

21. The method according to claim 20, further comprising arranging the sample to be analysed on the cover of the sensing guide (505).

22. The method according to any one of claims 20 to 21, further comprising determining one or more parameters of the sample to be analysed by processing a plurality of measurements taken by the biosensor on one or more orthogonal light states of the plurality of orthogonal light states (201, 202).

23. The method according to claim 22, wherein determining the one or more parameters comprises: measuring, for each orthogonal light state (201, 202) a relative phase difference between optical signals passing through the sensing guide (505) and the reference guide (506); providing a phase difference vector $\overline{\phi}$, corresponding to each orthogonal light state, based on the measurements; and calculating an effective index variation of each of the orthogonal light states (505, 506) with the following equation:

$$\overline{\Delta n_{\text{eff}}} = \overline{\text{diag}\left(\frac{\lambda_i}{2\pi L}\right)\overline{\phi}},$$

where $\lambda_i$ is a wavelength of each orthogonal light state, $L$ is a length of the sensing guide, and $\overline{\Delta n_{\text{eff}}}$ is the effective index variation vector of each orthogonal light state (201, 202).

FIG. 1.a

FIG. 1.b

FIG. 2.a

FIG. 2.b

FIG. 2.c

FIG. 2.d

EP 4 636 389 A1

FIG. 3

FIG. 4

FIG. 5

FIG. 6.a

FIG. 6.b

FIG. 6.c

FIG. 6.d

FIG. 7

FIG. 8

# INTERNATIONAL SEARCH REPORT

| International application No. |
|---|
| PCT/ES2023/070688 |

## A. CLASSIFICATION OF SUBJECT MATTER

*G01N21/45* (2006.01)

According to International Patent Classification (IPC) or to both national classification and IPC

## B. FIELDS SEARCHED

Minimum documentation searched (classification system followed by classification symbols)
G01N

Documentation searched other than minimum documentation to the extent that such documents are included in the fields searched

Electronic data base consulted during the international search (name of data base and, where practicable, search terms used)

EPODOC, INVENES, WPI, INSPEC, IEEE, SPIE

## C. DOCUMENTS CONSIDERED TO BE RELEVANT

| Category* | Citation of document, with indication, where appropriate, of the relevant passages | Relevant to claim No. |
|---|---|---|
| A | WO 2018150205 A1 (ARISTOTLE UNIV OF THESSALONIKI RESEARCH COMMITTEE E L K E et al.) 23/08/2018, Abstract; pages 4, 5, 8, 10, 12, 13, 15, 17, 21; figures 1, 10. | 1-23 |
| A | JOHNATTAN C. RAMIREZ et al.: "Current Trends in Photonic Biosensors: Advances towards Multiplexed Integration". Chemosensors, 30/09/2022 [on line][retrieved 22/12/2023]. Retrieved from <URL: https://www.mdpi.com/2227-9040/10/10/398>, <DOI: 10.3390/chemosensors10100398>, The whole document. | 1-23 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 22/12/2023 | **(28/12/2023)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | F. Domínguez Gómez Telephone No. 913498520 |

Form PCT/ISA/210 (second sheet) (July 2022)

22

## INTERNATIONAL SEARCH REPORT

International application No.

PCT/ES2023/070688

C (continuation).                    DOCUMENTS CONSIDERED TO BE RELEVANT

| Category * | Citation of documents, with indication, where appropriate, of the relevant passages | Relevant to claim No. |
|---|---|---|
| A | PANAGIOTA, PETROU et al.: "Monolithically Integrated Label-Free Optical Immunosensors". Engineering Proceedings, 15/02/2022 [on line][retrieved 22/12/2023]. Retrieved from <URL: https://www.mdpi.com/2673-4591/16/1/11>, <DOI: 10.3390/IECB2022-12283>, The whole document. | 1-23 |

Form PCT/ISA/210 (continuation of second sheet) (July 2022)

## INTERNATIONAL SEARCH REPORT

Information on patent family members

International application No.

PCT/ES2023/070688

| Patent document cited in the search report | Publication date | Patent family member(s) | Publication date |
|---|---|---|---|
| WO2018150205 A1 | 23.08.2018 | EA201991909 A1 | 05.02.2021 |
| | | JP2020508471 A | 19.03.2020 |
| | | JP7212901B B2 | 26.01.2023 |
| | | US2020003696 A1 | 02.01.2020 |
| | | US11204326 B2 | 21.12.2021 |
| | | KR20190128172 A | 15.11.2019 |
| | | KR102499209B B1 | 10.02.2023 |
| | | CN110325840 A | 11.10.2019 |
| | | CN110325840B B | 03.02.2023 |
| | | AU2018221428 A1 | 10.10.2019 |
| | | AU2018221428B B2 | 16.03.2023 |
| | | CA3053715 A1 | 23.08.2018 |
| | | EP3583406 A1 | 25.12.2019 |
| | | GR20170100088 A | 31.10.2018 |
| | | GR1009480 B | 19.03.2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8279445 B2